# EUROPEAN PATENT SPECIFICATION

(11) **EP 3 523 097 B1**
(45) Date of publication and mention of the grant of the patent: **28.04.2021**
(21) Application number: 17794071.5
(22) Date of filing: 04.10.2017
(51) Int. Cl.: B25J 5/04, B05B 13/04, B25J 11/00, B60S 3/00

(54) **MACHINE FOR THE MACHINING OF RAILWAY WAGONS**
MASCHINE ZUR BEARBEITUNG VON EISENBAHNWAGGONS
MACHINE POUR L'USINAGE DE WAGONS DE CHEMIN DE FER

(30) Priority: 04.10.2016 IT 201600099524
(43) Date of publication of application: 14.08.2019
(73) Proprietor: ARTIMO S.r.l., 20124 Milano (IT)
(72) Inventor: RINA, Vincenzo, 20124 Milano (IT)
(74) Representative: Zoli, Filippo
(86) International application number: PCT/IB2017/056104
(87) International publication number: WO 2018/065906

(56) References cited:
- WO-A2-2008/110899
- CN-A- 104 589 311
- US-A1- 2006 182 557
- US-A1- 2012 325 142
- US-A1- 2013 071 573
- US-A1- 2015 375 390

## Description

### Technical Field

The present invention relates to a machine for the machining of railway wagons.

### Prior Art

The industrial production of railway wagons comprises the succession of different types of machining operations which precede the obtaining of the finished product.

In particular, the casing defining the space in which people are transported is obtained by means of an initial extrusion process, in the case of its being made of aluminum, or by means of an initial welding of preformed walls, in the case of its being made of steel.

In either case, to obtain the finished product, subsequent sanding steps are required, which are useful for providing the casing with a rounded and aerodynamic shape, milling steps, which are useful for the realization of the opening of the windows or entrance doors, painting steps and other operations useful for machining the rough casing to obtain the finished product.

Machines for the realization of these machining steps are known which provide for the use of anthropomorphic robots provided with machining means and adapted to perform sanding, milling, painting and other operations useful for machining the rough casing to obtain the finished product.

The need is known to facilitate and simplify the above described machining operations.

In particular, from a logistical point of view, the need is known to use as little space as possible for the preparation of less space-consuming and more flexible construction sites, just as the need is known to reduce the building works and metal sections needed to prepare the site itself.

The need is equally known to improve the quality of machining operations in order to obtain finished products which better comply with quality technical requirements and market demands.

US 2013/071573 discloses a machine for painting structures, and in particular for painting a wing for an aircraft. The machine disclosed by US 2013/071573 comprises a holding structure having two uprights extending vertically and arranged on the opposite sides of a wing to be machined and comprises, for each upright, a corresponding anthropomorphic robot for machining the wing.

CN 104589311 discloses a robot apparatus for automotive body painting comprising a frame movable along a main direction and supporting two three-degree of freedom mechanism moving vertically and one six-degree of freedom mechanism moving horizontally on the frame.

US2006/182557 discloses one manipulator system for the shape-independent and/or size-independent connection of individual components to form sections 1 for transportation vehicles, such as aircraft.

### Description of the Invention

The main aim of the present invention is to devise a machine for the machining of railway wagons, which permits more convenient and efficient machining of the wagons.

One object within the main aim of the present invention is to devise a machine for the machining of railway wagons which allows optimizing costs and schedules tied to the machining of the wagons.

Another object of the present invention is to provide a machine for the machining of railway wagons which allows overcoming the aforementioned drawbacks of the prior art within the scope of a simple, rational, easy, effective to use and affordable solution.

The aforementioned objects are achieved by the present machine for the machining of railway wagons having the characteristics of claim 1.

### Brief Description of the Drawings

Other characteristics and advantages of the present invention will become more evident from the description of a preferred, but not exclusive, embodiment of a machine for the machining of railway wagons, illustrated by way of an indicative, but non-limiting example, in the attached drawings in which:

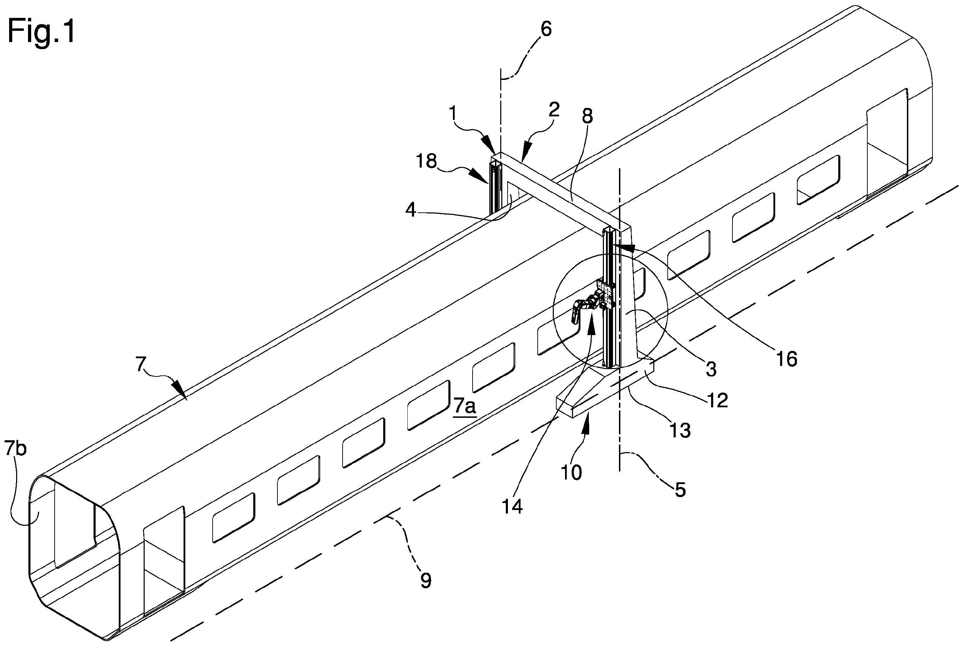

Figure 1 is an axonometric view of the machine according to the invention;

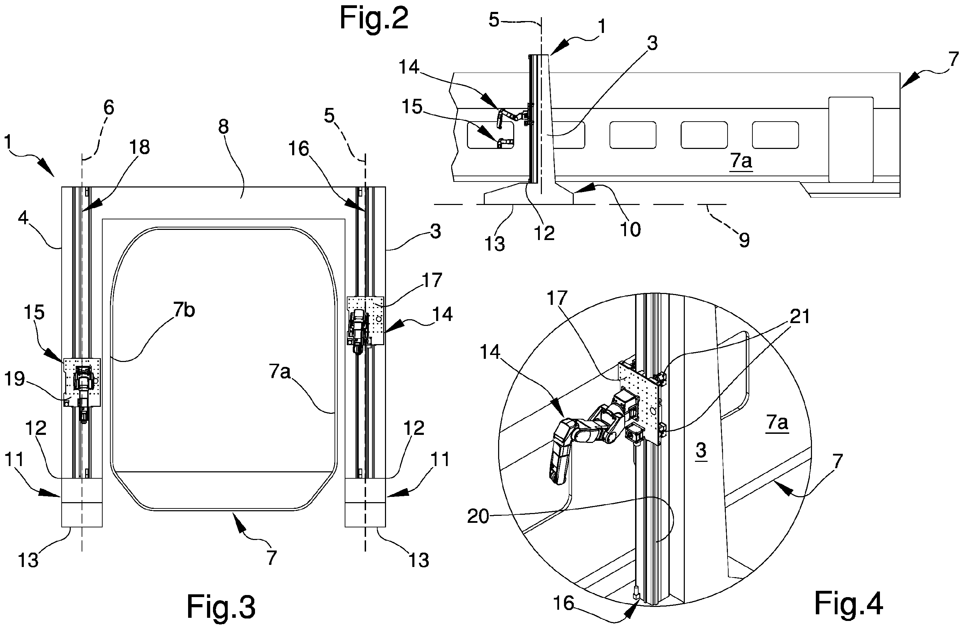

Figure 2 is a lateral perspective view of the machine according to the invention;
Figure 3 is a front perspective view of the machine according to the invention;
Figure 4 is an axonometric view of a detail of the machine according to the invention.

### Embodiments of the Invention

With particular reference to these illustrations, reference numeral 1 globally indicates a machine for the machining of railway wagons.

According to the invention, the machine 1 comprises a holding structure 2 having a first upright 3 and a second upright 4 that extend along respective first direction 5 and second direction 6 substantially parallel to one another.

As shown in the illustrations, the first direction 5 and the second direction 6 are vertical, but solutions cannot be ruled out which provide for inclined directions 5, 6.

The uprights 3, 4 are adapted to be arranged on the opposite side with respect to a wagon 7 to be machined.

In the present embodiment, the holding structure 2 comprises a substantially horizontal beam 8 associated with the first upright 3 and with the second upright 4 to define an inverted U-shape.

The structure 2 thus defined partially surrounds one portion of the wagon 7 to be machined.

Still according to the invention, the machine 1 comprises sliding means 10, 11 of the structure 2 along a main direction 9.

In this embodiment, the main direction 9 is substantially orthogonal to the uprights 3, 4, but solutions having a different main direction cannot be ruled out.

Preferably, the main direction 9 coincides with the longitudinal direction of the wagon 7, although different solutions wherein such directions do not coincide cannot be ruled out.

In particular, the sliding means 10, 11 comprise at least a first base 10 sliding along the main direction 9 and locked together with the first upright 3. Similarly, the sliding means 10, 11 comprise at least a second base 11 sliding along the main direction 9 and locked together with the second upright 4.

In the present embodiment, the first base 10 and the second base 11 extend parallel to the main direction 9, and have a top portion 12 on which the uprights 3, 4 and a bottom portion 13 are fixed.

The bottom portion 13 comprises sliding elements, for simplicity not shown in the illustrations, adapted to enable the sliding of the first base 10 and the second base 11, with their respective uprights 3, 4, along the main direction 9.

The sliding elements can be of the type of wheels, or of rollers, or of runners, but other solutions adapted to enable the sliding of the bases 10, 11 cannot be ruled out.

Advantageously, the sliding means 10, 11 comprise first guide means adapted to guide the first base 10 along the main direction 9.

Similarly, the sliding means 10, 11 also comprise second guide means adapted to guide the second base 11 along the main direction 9.

The guide means, for simplicity not illustrated, are adapted to interact with the sliding elements, and therefore with the bases 10, 11, to guide the sliding of these along the main direction 9.

The guide means can be of the type of tracks, but other solutions cannot be ruled out such as rails, raised elements and bas-relief elements.

According to the invention, furthermore, the machine 1 comprises machining means 14, 15, 16, 17, 18, 19 of the wagon 7.

The machining means 14, 15, 16, 17, 18, 19 comprise a first anthropomorphic robot 14 associated sliding with the first upright 3, and a second anthropomorphic robot 15 associated sliding with the second upright 4.

The first robot 14 is adapted to perform machining operations on a first side 7a of the wagon 7.

The second robot 15 is adapted to perform machining operations on a second side 7b of the wagon 7.

Conveniently, the machining means 14, 15, 16, 17, 18, 19 comprise movement means 16, 17, 18, 19 of the first robot 14 and of the second robot 15 adapted to enable the sliding of same with respect to the uprights 3, 4.

In the present embodiment, the robots 14, 15 slide along the uprights 3, 4, but solutions cannot be ruled out which provide for a different sliding of the robots 14, 15, e.g. along inclined directions with respect to the uprights 3, 4.

In particular, the movement means 16, 17, 18, 19 comprise a first longitudinal guide 16, associated with the first upright 3 and extending along the first direction 5, and a first slide element 17 supporting the first robot 14 and associated with the first guide 16 for the movement of the same along the first direction 5.

Furthermore, the movement means 16, 17, 18, 19 comprise a second longitudinal guide 18, associated with the second upright 4 and extending along the second direction 6, and a second slide element 19 supporting the second robot 15 and associated with the second guide 18 for the movement of same along the second direction 6.

In this embodiment, the first and second guides 16, 18 are of the type of longitudinal profiles defining engagement undercuts 20.

The first robot 14 and the second robot 15 have the first slide element 17 and the second slide element 19 engaging with their respective first guide 16 and second guide 18 and adapted to slide along them.

In particular, the slide elements 17, 19 comprise engagement elements 21 associated with the engagement undercuts 20 and adapted to form with these sliding couplings for the guided movement of the respective robots 14, 15 along the uprights 3, 4.

Different solutions cannot be ruled out wherein the sliding couplings are made differently, e.g., with grooved guides and engagement elements inserted therein, or with belt systems or pulley systems.

Advantageously, the first robot 14 and the second robot 15 are movable independently the one with respect to the other.

This way it is possible to differentiate machining operations from one side of the wagon to the other, thus improving the adaptability of the machining operations.

Usefully, the machining means 14, 15, 16, 17, 18, 19 comprise one sanding device, for simplicity not shown in the illustrations, associated with at least one of the first robot 14 and the second robot 15.

Advantageously, the machining means 14, 15, 16, 17, 18, 19 comprise at least one pressure sensor, for simplicity not shown in the illustrations, operatively connected to the sanding device.

The pressure sensor is adapted to detect pressure data to be transmitted to a control unit integrated in the machine for the control of sanding in order to achieve uniform smoothing over of the wagon 7.

Preferably, both robots 14, 15 have a sanding device with relevant associated pressure sensors.

In particular, the machining means 14, 15, 16, 17, 18, 19 comprise a first sanding device and a first pressure sensor connected thereto, associated with the first robot, and a second sanding device and a second pressure sensor connected thereto, associated with the second robot 15.

This way it is possible to work on both sides 7a, 7b of the wagon 7 at the same time and obtaining uniform smoothing over for both sides.

Usefully, the machining means 14, 15, 16, 17, 18, 19 also comprise other types of machining devices, e.g., milling devices, painting devices and other devices adapted to perform machining operations to work the wagon 7 to obtain the finished product.

Solutions cannot be ruled out which provide for only some of the devices listed above.

The operation of the present invention is as follows.

The holding structure 2 shifts along the main direction 9 thanks to the sliding means 10, 11 thus reaching one portion of the wagon 7 to be machined.

At the selected point, the machining means 14, 15, 16, 17, 18, 19 are activated to perform a desired machining operation, e.g. a sanding operation, on the portion of wagon 7, but the same operations can be carried out also for other types of machining operations such as milling or painting.

The first robot 14 is mobilized along the first direction 5 thanks to the sliding of the first slide element 17 along the first guide 16.

In the same way, but independently, the second robot 15 is also mobilized along the second direction 6 thanks to the sliding of the second slide element 19 along the second guide 18.

The relevant sanding devices carry out the sanding of the respective sides 7a and 7b of the wagon 7.

The pressure sensors detect pressure data useful for electronically controlling smoothing over and therefore sanding of the wagon, thus allowing uniform smoothing over.

The operations can be repeated for another portion of wagon 7 to be machined, reachable by means of the sliding of the structure 2 along the main direction 9.

It has in practice been ascertained how the described invention achieves the intended objects and in particular the fact is underlined that the machine for the machining of railway wagons permits more convenient and efficient machining of wagons.

The structure moveable along a main direction, preferably along the direction of extension of the wagon, allows machining the entire surface of the wagon without displacing the latter.

Furthermore, the independent mobility of the two robots permits obtaining greater flexibility for different types of machining operations.

Furthermore, the devised machine makes auxiliary building works and metal sections, adapted to support machining means and devices, superfluous, thus simplifying the setting up of worksites.

It is therefore evident that the machine so devised optimizes costs and schedules tied to the machining of the wagons.

## Claims

1. Machine (1) for the machining of railway wagons comprising:
- a holding structure (2) having a first upright (3) and a second upright (4) that extend along respective first direction (5) and second direction (6) substantially parallel and adapted to be arranged on the opposite side with respect to a wagon (7) to be machined;
- sliding means (10, 11) of said structure (2) along a main direction (9);
- machining means (14, 15, 16, 17, 18, 19) of said wagon (7) comprising at least a first anthropomorphic robot (14) associated sliding with said first upright (3), and at least a second anthropomorphic robot (15) associated sliding with said second upright (4),
**characterized by** the fact that said holding structure (2) comprises a substantially horizontal beam (8) associated with said first upright (3) and said second upright (4) to define an inverted U-shape
and by the fact that said machining means (14, 15, 16, 17, 18, 19) comprise:
- a first sanding device and a first pressure sensor connected thereto, associated with said first robot (14); and
- a second sanding device and a second pressure sensor connected thereto, associated with said second robot (15).

2. Machine (1) according to claim 1, **characterized by** the fact that said sliding means (10, 11) comprise at least a first sliding base (10) along said main direction (9) and locked together with said first upright (3).

3. Machine (1) according to claim 2, **characterized by** the fact that said sliding means (10, 11) comprise first guide means adapted to guide said first base (10) along said main direction (9).

4. Machine (1) according to claim 1, **characterized by** the fact that said sliding means (10, 11) comprise at least a second base (11) sliding along said main direction (9) and locked together with said second upright (4).

5. Machine (1) according to claim 4, **characterized by** the fact that said sliding means (10, 11) comprise second guide means adapted to guide said second base (11) along said main direction (9).

6. Machine (1) according to one or more of the preceding claims, **characterized by** the fact that said machining means (14, 15, 16, 17, 18, 19) comprise movement means (16, 17, 18, 19) of said first robot (14) and of said second robot (15).

7. Machine (1) according to claim 6, **characterized by** the fact that said movement means (16, 17, 18, 19) comprise:
- at least a first longitudinal guide (16) associated with said first upright (3) and extending along said first direction (5); and
- at least a first slide element (17) supporting said first robot (14) and associated with said first guide (16) for the movement of said first robot (14) along said first direction (5).

8. Machine (1) according to claim 6 or 7, **characterized by** the fact that said movement means (16, 17, 18, 19) comprise:
- at least a second longitudinal guide (18) associated with said second upright (4) and extending along said second direction (6); and
- at least one second slide element (19) supporting said second robot (15) and associated with said second guide (18) for the movement of said second robot (15) along said second direction (6).

9. Machine (1) according to one or more of the preceding claims, **characterized by** the fact that said first robot (14) and said second robot (15) are movable independently the one with respect to the other.

## Patentansprüche

1. Maschine (1) für die Bearbeitung von Eisenbahnwaggons, bestehend aus:
- einer Haltestruktur (2) mit einem ersten Ständer (3) und einem zweiten Ständer (4), die sich entlang einer ersten Richtung (5) bzw. einer zweiten Richtung (6) im Wesentlichen parallel erstrecken und angepasst sind, auf der gegenüberliegenden Seite in Bezug auf einen zu bearbeitenden Wagen (7) angeordnet zu werden;
- Gleitmittel (10, 11) der genannten Struktur (2) entlang einer Hauptrichtung (9);
- Bearbeitungsmittel (14, 15, 16, 17, 18, 19) des Wagens (7), umfassend mindestens einen ersten anthropomorphen Roboter (14), der gleitend mit dem ersten Ständer (3) verbunden ist, und mindestens einen zweiten anthropomorphen Roboter (15), der gleitend mit dem zweiten Ständer (4) verbunden ist,
**dadurch gekennzeichnet, dass** die Haltestruktur (2) einen im Wesentlichen horizontalen Träger (8) umfasst, der mit dem ersten Ständer (3) und dem zweiten Ständer (4) verbunden ist, um eine umgekehrte U-Form zu definieren, und dass die Bearbeitungsmittel (14, 15, 16, 17, 18, 19) umfassen:
- eine erste Schleifvorrichtung und einen damit verbundenen ersten Drucksensor, der dem ersten Roboter (14) zugeordnet ist; und
- eine zweite Schleifvorrichtung und einen damit verbundenen zweiten Drucksensor, der mit dem zweiten Roboter (15) verbunden ist.

2. Maschine (1) nach Anspruch 1, **dadurch gekennzeichnet, dass** die Gleitmittel (10, 11) mindestens eine erste Gleitbasis (10) entlang der Hauptrichtung (9) umfassen und zusammen mit dem ersten Ständer (3) verriegelt sind.

3. Maschine (1) nach Anspruch 2, **dadurch gekennzeichnet, dass** die Gleitmittel (10, 11) erste Führungsmittel umfassen, die angepasst sind, die erste Basis (10) entlang der Hauptrichtung (9) zu führen.

4. Maschine (1) nach Anspruch 1, **dadurch gekennzeichnet, dass** die Gleitmittel (10, 11) mindestens eine zweite Basis (11) umfassen, die entlang der Hauptrichtung (9) gleitet, und zusammen mit dem zweiten Ständer (4) verriegelt ist.

5. Maschine (1) nach Anspruch 4, **dadurch gekennzeichnet, dass** die Gleitmittel (10, 11) zweite Führungsmittel umfassen, die angepasst sind, die zweite Basis (11) entlang der Hauptrichtung (9) zu führen.

6. Maschine (1) nach einem oder mehreren der vorhergehenden Ansprüche, **dadurch gekennzeichnet, dass** die Bearbeitungsmittel (14, 15, 16, 17, 18, 19) Bewegungsmittel (16, 17, 18, 19) des ersten Roboters (14) und des zweiten Roboters (15) umfassen.

7. Maschine (1) nach Anspruch 6, **dadurch gekennzeichnet, dass** die Bewegungsmittel (16, 17, 18, 19) umfassen:
- mindestens eine erste Längsführung (16), die mit dem ersten Ständer (3) verbunden ist und sich entlang der ersten Richtung (5) erstreckt; und
- mindestens ein erstes Gleitelement (17), das den ersten Roboter (14) trägt und mit der ersten Führung (16) für die Bewegung des ersten Roboters (14) entlang der ersten Richtung (5) verbunden ist.

8. Maschine (1) nach Anspruch 6 oder 7, **dadurch gekennzeichnet, dass** die Bewegungsmittel (16, 17, 18, 19) umfassen:
- mindestens eine zweite Längsführung (18), die mit dem zweiten Ständer (4) verbunden ist und sich entlang der zweiten Richtung (6) erstreckt; und
- mindestens ein zweites Gleitelement (19), das den zweiten Roboter (15) trägt und mit der zweiten Führung (18) für die Bewegung des zweiten Roboters (15) entlang der zweiten Richtung (6) verbunden ist.

9. Maschine (1) nach einem oder mehreren der vorhergehenden Ansprüche, **dadurch gekennzeichnet, dass** der erste Roboter (14) und der zweite Roboter (15) unabhängig voneinander bewegbar sind.

## Revendications

1. Machine (1) pour l'usinage de wagons ferroviaires comprenant :
- une structure de maintien (2) ayant un premier montant (3) et un second montant (4) qui s'étendent le long d'une première direction (5) et d'une seconde direction (6) respectives sensiblement parallèles et adaptés pour être agencés sur le côté opposé par rapport à un wagon (7) devant être usiné ;
- des moyens coulissants (10, 11) de ladite structure (2) le long d'une direction principale (9) ;
- des moyens d'usinage (14, 15, 16, 17, 18, 19) dudit wagon (7) comprenant au moins un premier robot anthropomorphique (14) associé coulissant audit premier montant (3), et au moins un second robot anthropomorphique (15) associé coulissant audit second montant (4),
**caractérisée par le fait que** ladite structure de maintien (2) comprend une poutre (8) sensiblement horizontale associée audit premier montant (3) et audit second montant (4) pour définir une forme de U inversé
et **par le fait que** lesdits moyens d'usinage (14, 15, 16, 17, 18, 19) comprennent :
- un premier dispositif de ponçage et un premier capteur de pression relié à celui-ci, associé audit premier robot (14) ; et
- un second dispositif de ponçage et un second capteur de pression relié à celui-ci, associé audit second robot (15).

2. Machine (1) selon la revendication 1, **caractérisée par le fait que** lesdits moyens coulissants (10, 11) comprennent au moins une première base coulissante (10) le long de ladite direction principale (9) et verrouillée ensemble avec ledit premier montant (3).

3. Machine (1) selon la revendication 2, **caractérisée par le fait que** lesdits moyens coulissants (10, 11) comprennent des premiers moyens guides adaptés pour guider ladite première base (10) le long de ladite direction principale (9).

4. Machine (1) selon la revendication 1, **caractérisée par le fait que** lesdits moyens coulissants (10, 11) comprennent au moins une seconde base (11) coulissant le long de ladite direction principale (9) et verrouillée ensemble avec ledit second montant (4).

5. Machine (1) selon la revendication 4, **caractérisée par le fait que** lesdits moyens coulissants (10, 11) comprennent des seconds moyens guides adaptés pour guider ladite seconde base (11) le long de ladite direction principale (9).

6. Machine (1) selon une ou plusieurs des revendications précédentes, **caractérisée par le fait que** lesdits moyens d'usinage (14, 15, 16, 17, 18, 19) comprennent des moyens de déplacement (16, 17, 18, 19) dudit premier robot (14) et dudit second robot (15).

7. Machine (1) selon la revendication 6, **caractérisée par le fait que** lesdits moyens de déplacement (16, 17, 18, 19) comprennent :
- au moins un premier guide longitudinal (16) associé audit premier montant (3) et s'étendant le long de ladite première direction (5) ; et
- au moins un premier élément de glissière (17) supportant ledit premier robot (14) et associé audit premier guide (16) pour le déplacement dudit premier robot (14) le long de ladite première direction (5).

8. Machine (1) selon la revendication 6 ou 7, **caractérisée par le fait que** lesdits moyens de déplacement (16, 17, 18, 19) comprennent :
- au moins un second guide longitudinal (18) associé audit second montant (4) et s'étendant le long de ladite seconde direction (6) ; et
- au moins un second élément de glissière (19) supportant ledit second robot (15) et associé audit second guide (18) pour le déplacement dudit second robot (15) le long de ladite seconde direction (6).

9. Machine (1) selon une ou plusieurs des revendications précédentes, **caractérisée par le fait que** ledit premier robot (14) et ledit second robot (15) sont mobiles indépendamment l'un par rapport à l'autre.
